# EUROPÄISCHE PATENTSCHRIFT

(11) **EP 1 101 988 B1**
(45) Veröffentlichungstag und Bekanntmachung des Hinweises auf die Patenterteilung: **09.11.2005**
(21) Anmeldenummer: 00124000.1
(22) Anmeldetag: 04.11.2000
(51) Int. Cl.: F16L 3/237, F16L 3/13

(54) **Doppelschelle mit drehbarer Schellenverbindung**
Dual clamp provided with a rotating connection
Collier de serrage double avec raccord pivotant

(30) Priorität: 19.11.1999 DE 19955654
(43) Veröffentlichungstag der Anmeldung: 23.05.2001
(73) Patentinhaber: A. Raymond & Cie, F-38028 Grenoble-Cédex (FR)
(72) Erfinder: Bodo, Giuseppe, 13100 Vercelli (IT); Mutz, Bernd, 79650 Schopfheim (DE)
(74) Vertreter: Rüttgers, Joachim

(56) Entgegenhaltungen:
- DE-U- 8 413 621
- DE-U- 9 014 188
- FR-A- 2 491 165
- US-A- 3 584 348

## Beschreibung

Die Erfindung betrifft eine Doppelschelle gemäß dem Oberbegriff des Patentanspruchs 1.

Bei der Halterung von zwei nebeneinander geführten Rohren oder Kabeln ist es oft erforderlich, die Schellenkörper so zu gestalten, daß die Schellenachsen gegeneinander verdreht werden können. Hierzu gibt es beispielsweise Schellenkörper mit ineinandersteckbaren Verbindungsteilen, die bei Kunststoffschellen üblicherweise an der Außenwand angeformt sind. Diese drehbaren Verbindungen werden entweder durch "männliche" und "weibliche" Verbindungsansätze oder durch sogenannte "hermaphrodite" Ansätze gebildet, welche nach Drehung um 180° ineinandergesteckt werden können.

Im ersten Fall erlaubt die Verbindung zwar eine volle 360° Drehung; dafür müssen aber die beiden Schellen zwei unterschiedliche Verbindungsansätze aufweisen, was zwei unterschiedliche Formen erfordert. Dies führt zwangsläufig zu höheren Herstellungskosten, was bei Massenartikel nicht erwünscht ist. Im zweiten Fall besitzt jeder Schellenkörper den gleichen Verbindungsansatz, so daß nur eine Form erforderlich ist. Dafür erlaubt diese Verbindung aber nur einen begrenzten Verdrehwinkel.

Drehbare Verbindungen sind auch bei Doppelschellen aus Metall bekannt, doch werden hierbei in der Regel besondere Verbindungshülsen verwendet, so daß auch in diesem Fall zur drehbaren Schellenverbindung ein gesondertes Teil benötigt wird. In jedem Fall, ob Kunststoff- oder Metallausführung, ist ein besonderer Arbeitsgang erforderlich, um die beiden Schellen miteinander zu verbinden, was die Herstellungskosten zusätzlich erhöht.

Aus FR 2 491 165 ist eine Doppelschelle mit drehbarer Schellenverbindung zur Halterung von nebeneinander geführten Rohren bekannt, wobei beide Schellenkörper durch einen Brückensteg aus dem gleichen Material einstückig miteinander verbunden sind. Der Steg ist aus einem im wesentlichen rechteckigen Querschnitt gebildet.

Weitere Doppelschwellen sind aus DE-U-90 14 188 und aus US-A-3 584 348 bekannt.

Aufgabe der Erfindung ist es, eine Doppelschelle der eingangs genannten Art so zu gestalten, daß diese ohne Beschränkung des Verdrehwinkels möglichst billig und stabil herzustellen ist.

Dies wird bei einer Doppelschelle der eingangs genannten Art mit den kennzeichnenden Merkmalen des Patentanspruchs 1 erreicht.
Durch die erfindungsgemäße Ausgestaltung können sich die Schellen im wesentlichen nur um die Stegachse drehen, während Kippbewegungen nur sehr begrenzt möglich sind.

Der Steg ist aus Festigkeitsgründen vorzugsweise mit einem rechteckigen Querschnitt ausgebildet.

In der Zeichnung ist ein Ausführungsbeispiel der Erfindung dargestellt, welches nachfolgend näher erläutert werden soll. Es zeigen
- Fig. 1: eine Doppelschelle aus Kunststoff in Seitenansicht,
- Fig. 2: die gleiche Doppelschelle in Draufsicht,
- Fig. 3: einen Schnitt durch den Verbindungssteg gemäß Linie III - III in Figur 2,
- Fig. 4: die Doppelschelle in perspektivischer Darstellung,
- Fig. 5: eine Doppelschelle wie Figur 1 mit eingelegten Rohren und
- Fig. 6: die gleiche Doppelschelle wie in Fig. 5, jedoch mit um 90° gegeneinander verdrehten Schellenachsen,

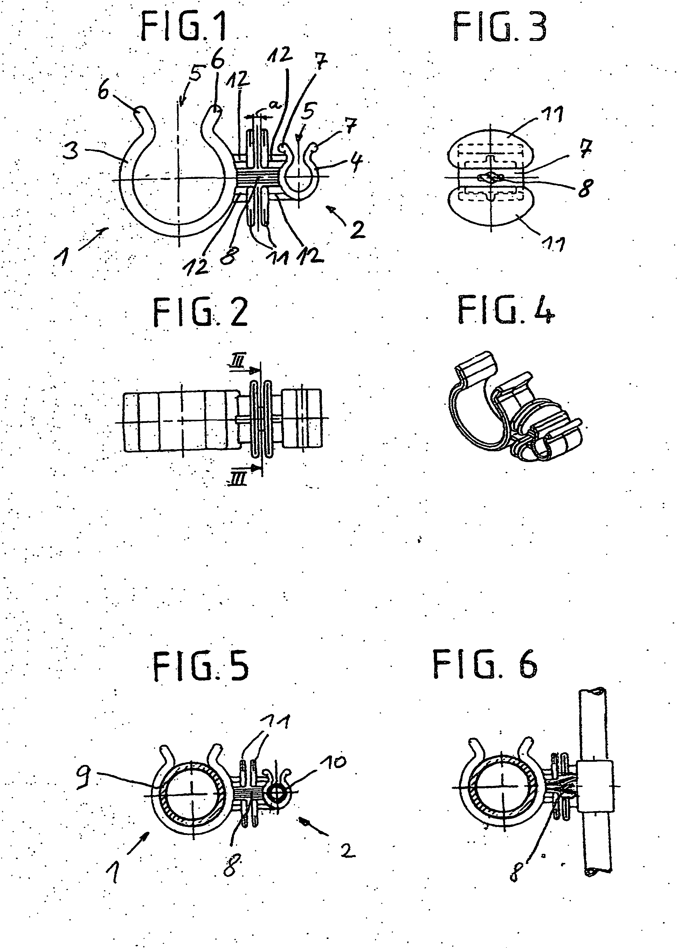

In den Figuren 1 bis 6 ist eine erfindungsgemäße Doppelschelle aus weichelastischem Kunststoffmaterial dargestellt. Die Doppelschelle besteht hierbei aus zwei unterschiedlich großen Schellenkörpem **1** und **2,** deren Schellenwände **3** und **4** jeweils kreisbogenförmig ausgebildet sind und an einer Seite eine Öffnung **5** bilden, durch welche Rohre **9** und **10** unter elastischer Aufbiegung der Schellenwände **3** und **4** eingeführt werden. Die Schellenwände **3** und **4** besitzen hierzu an ihren freien Enden beiderseits der Öffnung **5** schräg nach innen weisende Einführwände **6** und **7**.

Beide Schellenkörper **1** und **2** sind über einen Brückensteg **8** einstückig miteinander verbunden. Dieser Steg gestattet aufgrund seiner Flexibilität eine Verdrehung der beiden Schellenachsen, so daß die Schellenkörper **1** und **2** beim Verlegen der Rohre **9** und **10** den jeweiligen örtlichen Gegebenheiten angepaßt werden können ( vgl. Figuren **5** und **6** ). Selbstverständlich lassen sich die Schellenkörper **1** und **2** auf alle Neigungswinkel der nebeneinander verlaufenden Rohre **9** und **10** einstellen bzw. anpassen.

Wie insbesondere aus Figur 3 ersichtlich, weist der Steg **8** vorzugsweise einen im wesentlichen rechteckigen Querschnitt auf. Dadurch erhält der Steg **8** eine hohe Zugfestigkeit bei gleichzeitig guter Verdrehflexibilität.

Um das gegebene Biegeverhalten des Steges **8** zu begrenzen, sind an beiden Schellenkörpern **1** und **2** Stützteller **11** vorgesehen, die über starre Rippen **12** an den Schellenwänden **3** und **4** angeformt sind. Diese Stützteller **11** weisen aus formungstechnischen Gründen einen kleinen Abstand "**a"** voneinander auf, welcher mit dem Vorteil verbunden ist, daß eine nur geringe Kippbewegung der beiden Schellenkörper **1** und **2** zueinander möglich ist.

## Patentansprüche

1. Doppelschelle mit drehbarer Schellenverbindung zur Halterung von nebeneinander geführten Rohren, wobei beide Schellenkörper (1, 2) durch einen Brückensteg (8) aus dem gleichen Material einstückig miteinander verbunden sind, **dadurch gekennzeichnet, dass** an beiden Schellenkörpem (1, 2) um den Steg (8) herum Stützteller (11) angeformt sind, welche einen geringen Abstand (a) voneinander aufweisen.

2. Doppelschelle mit drehbarer Schellenverbindung nach Anspruch 1, **dadurch gekennzeichnet, daß** der Steg (8) aus einem im wesentlichen rechteckigen Querschnitt gebildet ist.

3. Doppelschelle mit drehbarer Schellenverbindung nach Ansprüche 1 oder 2 **dadurch gekennzeichnet, dass** sie aus Kunststoffmaterial ist.

## Claims

1. Dual clamp having a rotatable clamp connection for holding pipes laid side by side, the two clamp bodies (1, 2) being connected to one another as one piece by a bridge web (8) of the same material, **characterized in that** support plates (11) which are a small distance (a) apart are formed on both clamp bodies (1, 2) around the web (8).

2. Dual clamp having a rotatable clamp connection according to Claim 1, **characterized in that** the web (8) is formed from a substantially rectangular cross-section.

3. Dual clamp having a rotatable clamp connection according to Claim 1 or 2, **characterized in that** it is made of plastic material.

## Revendications

1. Support double à liaison entre colliers susceptible de pivoter, destiné à maintenir en position des éléments tubulaires disposés côte à côte, les deux colliers (1, 2) étant en l'occurrence reliés l'un à l'autre selon une disposition monobloc par l'intermédiaire d'un pontet-raccord 8 réalisé dans la même matière, **caractérisé en ce que** les deux colliers (1, 2) comportent, réalisés solidaires par formage autour du pontet-raccord (8), des coupelles d'appui (11) qui sont respectivement séparées par un intervalle d'écartement 'a) très réduit.

2. Support double à liaison entre colliers susceptible de pivoter selon la revendication 1, **caractérisé en ce que** le pontet-raccord (8) a une section transversale de forme sensiblement rectangulaire.

3. Support double à liaison entre colliers susceptible de pivoter selon la revendication 1 ou 2, **caractérisé en ce qu'**il est fabriqué en matière plastique.
